(19)

**Europäisches Patentamt**
**European Patent Office**
**Office européen des brevets**

(11)　**EP 1 364 587 B1**

(12)　**EUROPEAN PATENT SPECIFICATION**

(45) Date of publication and mention
of the grant of the patent:
**03.09.2008　Bulletin 2008/36**

(51) Int Cl.:
*A23L 2/54* (2006.01)　　　*A23L 2/60* (2006.01)
*A23L 2/38* (2006.01)

(21) Application number: **02701600.5**

(22) Date of filing: **27.02.2002**

(86) International application number:
**PCT/JP2002/001804**

(87) International publication number:
**WO 2002/067702 (06.09.2002 Gazette 2002/36)**

(54) **CARBONATED DRINKS**

KOHLENSÄUREHALTIGE GETRÄNKE

BOISSONS GAZEIFIEES

(84) Designated Contracting States:
**AT BE CH CY DE DK ES FI FR GB GR IE IT LI LU
MC NL PT SE TR**

(30) Priority: **27.02.2001　JP 2001051433**

(43) Date of publication of application:
**26.11.2003　Bulletin 2003/48**

(73) Proprietor: **SAN-EI GEN F.F.I., INC.**
**Toyonaka-shi,**
**Osaka 561-0828 (JP)**

(72) Inventors:
• **TAMIYA, Toshinaga**
**c/o SAN-EI GEN F.F.I., INC.**
**Toyonaka-shi,**
**Osaka 561-8588 (JP)**
• **HIRAO, Kazutaka**
**c/o SAN-EI GEN F.F.I., INC.**
**Toyonaka-shi,**
**Osaka 561-8588 (JP)**
• **ICHIMIYA, Makiko**
**c/o SAN-EI GEN F.F.I., INC.**
**Toyonaka-shi,**
**Osaka 561-8588 (JP)**

(74) Representative: **Smyth, Gyles Darren**
**Marks & Clerk**
**90 Long Acre**
**London**
**WC2E 9RA (GB)**

(56) References cited:
**WO-A-02/00043**　　　　　**WO-A-96/00510**
**JP-A- 2000 004 852**

• **DATABASE FSTA [Online] INTERNATIONAL
FOOD INFORMATION SERVICE (IFIS),
FRANFURT/MAIN, DE; DROBNY S: "Classical
and modern methods of sparkling wines
production." Database accession no. 76-2-10-
h1716 XP002271529 & VINOHRAD 1976
VINARSKE ZAVODY, OP SERED,
CZECHOSLOVAKIA, vol. 14, no. 2, pages 40-41,**

Remarks:
The file contains technical information submitted after
the application was filed and not included in this
specification

**Description**

## TECHNICAL FIELD

The present invention relates to a carbonated drink containing a fruit juice or like plant-derived component. More particularly, the present invention relates to a carbonated drink comprising 10 to 80% by weight of a plant-derived component and at least 2% by volume of carbon dioxide. Further, the present invention relates to a method of preparing a carbonated drink which, in spite of relatively high contents of a plant-derived component and carbon dioxide, as mentioned above, simultaneously has the rich taste of the plant-derived component and the refreshing feel of carbon dioxide and is thus well-balanced in feel and taste. Furthermore, a method is disclosed for reducing the heavy taste due to the plant-derived component and the bitterness and/or irritation due to carbon dioxide of a carbonated drink containing relatively high contents of a plant-derived component and carbon dioxide.

## BACKGROUND ART

Various fruit juice-containing carbonated drinks have so far been proposed for the purpose of improving the taste or flavor. While a large amount of a saccharide (s) is generally incorporated into fruit juice-containing drinks to thereby suppress the acidity of the fruit juice and make the taste mild and pleasant, Laid-open Japanese Patent Publication No.S63-207367 describes that fruit juice-containing carbonated drinks with a refreshing taste due to the fruit juice and a suppressed acidity can be obtained by incorporating 0.5 to 1.5% by volume of carbon dioxide, without any need of incorporating a large amount of saccharide (s). Further, Japanese Laid-Open Patent Publication No. S57-110178 describes that fruit juice-containing carbonated drinks satisfactory in refreshing feel and taste/flavor can be obtained by incorporating, into the carbonated drink, citrus fruit juice and lemon juice in a total amount of not more than 50% by weight.

Furthermore, Japanese Laid-Open Patent Publication No. S60-259169 describes a fruit juice-containing carbonated drink containing a high intensity sweetener (aspartame) as the sweetening component and having a carbon dioxide pressure of not higher than 2.5 kg/cm$^2$, Japanese Laid-Open Patent Application No. 2000-4852 describes a fruit juice-containing carbonated drink containing a bitterness-causing low-calorie sweetener as the sweetening component and 1 to 2% by volume of carbon dioxide, and Japanese Laid-Open Patent Publication No. H10-136952 and Japanese Laid-Open Patent Publication No. H10-136953 describe fruit juice-containing carbonated drinks in which erythritol and a high intensity sweetener are used togather as the sweetening component.

Thus, fruit juice-containing carbonated drinks have so far been proposed with various contrivances for making use of the feel and taste of fruit juices and providing cool and refreshing drinks. However, in the formulation of each of the carbonated drinks proposed, the content of either carbon dioxide or fruit juice, or both, is decreased in order to accomplish the intended objects described above. Alternatively, there is no definite description of the carbon dioxide volume or fruit juice content (Japanese Laid-Open Patent Application No. S57-110178).

## DISCLOSURE OF INVENTION

The reason why no carbonated drinks high in both fruit juice content and carbon dioxide content have been proposed is not certain. As mentioned later in the comparative examples, it was found that when a fruit juice is incorporated into a carbonated drink, the taste becomes heavy and the refreshing feel intrinsic to carbonated drinks is lost even when the level of added saccharide is reduced relative to the saccharide content of the fruit juice to thereby adjust the sweetness to the same level as in ordinary carbonated drinks (corresponding to about 8 to 14% by weight of sucrose) (Comparative Example 1) or, at a reduced level of added fruit juice, irritation by carbon dioxide becomes prominent (Comparative Example 2) in spite of the same level of sweetness. Thus, it was found that it is very difficult to attain balanced taste and flavor when incorporating both a fruit juice and carbon dioxide.

An obj ect of the present invention is to provide a carbonated drink, containing both a plant-derived component, such as a fruit juice, and carbon dioxide, with a good balance between the rich taste of the plant-derived component and the refreshing and stimulating properties (refreshing feel) of carbon dioxide.

Another object of the present invention is to provide a method for producing carbonated drinks containing a plant-derived component, such as a juice squeezed from a vegetable(s) or fruit (s), and having, in a well-balanced manner, the rich taste of the plant-derived component and the refreshing and stimulating properties (refreshing feel) of carbon dioxide, without the body feel due to the plant-derived component and/or the stimulating feel of carbon dioxide being excessively prominent relative to each other.

A further object is to provide a method for reducing the excessive body feel (heavy taste) due to the plant-derived component and the irritating feel due to carbon dioxide of a carbonated drink containing a plant-derived component, such as a fruit juice, and carbon dioxide in relatively large amounts.

The present inventors made various trials to develop a carbonated drink having a cool and refreshing feel while retaining the rich taste due to a plant-derived component and the stimulating property of carbon dioxide and, as a result, found that when the soluble solids content in a formulation containing 10 to 80% by weight of a plant-derived component and more than 2% by volume of carbon dioxide is reduced to a specific level or below by incorporating a specific amount of a high intensity sweetener, preferably sucralose, the intended objects can be accomplished without causing an excessively heavy taste or an excessively strong stimulation. The present invention has been completed based on such findings.

The present invention thus provides the following carbonated drinks:

1. A carbonated drink having the following formulation:

(1) containing plant-derived component(s) in a proportion of 10 to 80% by weight;
(2) containing carbon dioxide in a proportion of 2% by volume or more;
(3) having a soluble solids content of not higher than 8 degrees as indicated by a refractive saccharometer;
(4) having an entire sweetness equivalent to the sweetness of a sucrose content of 8 to 14% by weight;
(5) containing at least one high intensity sweetener, said at least one high intensity sweetener including sucralose;
(6) having the total sweetness due to the high intensity sweetener (s) accounting for at least 25% by weight of the entire sweetness (100% by weight) on the sucrose equivalent basis.

2. A carbonated drink according to the above item 1, wherein the plant-derived component is juice (s) squeezed from fruit (s) or vegetable(s).
3. A carbonated drink according to the above items 1 or 2, wherein the plant-derived component(s) is fruit juice(s).
4. A carbonated drink according to any of the above items 1 to 3, wherein the plant-derived component(s) is contained in a proportion of 30 to 70% by weight.
5. A carbonated drink according to any of the above items 1 to 4, wherein carbon dioxide is contained in a proportion of 2 to 4% by volume.
6. A carbonated drink according to any of items 1 to 5, wherein the soluble solids content is 2 to 8 degrees.
7. A carbonated drink according to any of items 1 to 6, wherein the sweetness due to sucralose accounts for at least 50% by weight of the entire sweetness (100% by weight) due to all high intensity sweetener (s) contained therein on the sucrose equivalent basis.
8. A carbonated drink according to any of item 1 to 7, wherein the high intensity sweetener is a mixture of sucralose and at least one sweetener selected from the group consisting of aspartame, acesulfame potassium, neotame, alitame, saccharin sodium, stevia-derived sweeteners and thaumatin.
9. A carbonated drink according to any of items 1 to 8, wherein the entire sweetness thereof is equivalent to the sweetness of a sucrose content of 8 to 12% by weight.
10. A carbonated drink according to any of items 1 to 9, wherein the sweetness due to the high intensity sweetener (s) accounts for 25 to 85% by weight of the entire sweetness (100% by weight) on the sucrose equivalent basis.
11. A carbonated drink according to any of items 1 to 10, the sweetness due to the high intensity sweetener (s) accounts for at least 35% by weight of the entire sweetness (100% by weight) on the sucrose equivalent basis.
12. A carbonated drink according to any of items 1 to 11, which contains 1 to 15% by weight of alcohol.
13. A method for producing carbonated drinks which substantially comprises the following steps of:

(1) adding plant-derived component (s) so that the final product carbonated drink contains the plant-derived component (s) in a proportion of 10 to 80% by weight;
(2) adding sweetener(s) so that the final product carbonated drink has an entire sweetness equivalent to the sweetness of a sucrose content of 8 to 14% by weight;
(3) adding at least one high intensity sweetener as the sweetener(s) so that the final product carbonated drink has the total sweetness due to the high intensity sweetener(s) accounting for at least 25% by weight of the entire sweetness (100% by weight) on the sucrose equivalent basis, said at least one high intensity sweetener including sucralose;
(4) adjusting the soluble solids content so that the final product carbonated drink has the soluble solids content of not higher than 8 degrees as indicated by a refractive saccharometer; and
(5) charging with carbon dioxide so that the final product carbonated drink contains carbon dioxide in a proportion of 2% by volume or more.

Furthermore, a method of reducing the body feel and irritating feel of carbonated drinks is disclosed:

15. A method for reducing the body feel and irritating feel due to plant-derived component(s) and carbon dioxide of a carbonated drink containing, as a basic formulation, 10 to 80% by weight of the plant-derived component(s) and 2% by volume or more of carbon dioxide, the method comprising adding high intensity sweetener (s) in addition to the above components and producing the carbonated drink so that the carbonated drink has the following characteristics (1) to (3):

(1) a soluble solids content being not higher than 8 degrees as indicated by a refractive saccharometer.
(2) an entire sweetness being equivalent to the sweetness of a sucrose content of 8 to 14% by weight; and
(3) a total sweetness due to the high intensity sweetener (s) accounting for not less than 25% by weight of the entire sweetness (100% by weight) on the sucrose equivalent basis.
The above reduction method includes the following modes of embodiment:

(15-1) A reductionmethod according to the above item 15, wherein the carbonated drink contains juice(s) squeezed from fruit(s) or vegetable(s) as the plant-derived component(s).
(15-2) A reduction method according to the above item 15, wherein the carbonated drink contains fruit juice (s) as the plant-derived component(s).
(15-3) A reduction method according to the above item 15, wherein the carbonated drink contains the plant-derived component(s) in a proportion of 30 to 70% by weight.
(15-4) A reduction method according to the above item 15, wherein
the carbonated drink contains carbon dioxide in a proportion of 2 to 4% by volume.
(15-5) A reduction method according to the above item 15, the method comprising producing the carbonated drink in such a manner that the soluble solids content of the carbonated drink is 2 to 8 degrees as indicated by a refractive saccharometer.
(15-6) A reductionmethod according to the above item 15, wherein at least one sweetener selected from the group consisting of sucralose, aspartame, acesulfame potassium, neotame, alitame, saccharin sodium, stevia-derived sweeteners and thaumatin is used as the high intensity sweetener(s).
(15-7) A reduction method according to the above item 15, wherein a mixture of sucralose and at least one sweetener selected from the group consisting of aspartame, acesulfame potassium, neotame, alitame, saccharin sodium, stevia-derived sweeteners and thaumatin is used as the high intensity sweetener(s).
(15-8) A reduction method according to the above item 15, wherein sucralose is used as the high intensity sweetener in a proportion such that the sweetness due to sucralose accounts for not less than 50% by weight of the entire sweetness (100% by weight) due to all high intensity sweetener(s) on the sucrose equivalent basis.
(15-9) A reductionmethod according to the above item 15, wherein the sweetener(s) is(are) added in a proportion such that the entire sweetness of the final product carbonated drink becomes equivalent to the sweetness of a sucrose content of 8 to 12% by weight.
(15-10) A reduction method according to the above item 15, wherein at least one high intensity sweetener is added as the sweetener in a proportion such that the total sweetness due to the high intensity sweetener (s) accounts for 25 to 85% by weight of the entire sweetness (100% by weight) of the final product carbonated drink on the sucrose equivalent basis.
(15-11) A reduction method according to the above item 15, wherein at least one high intensity sweetener is added as the sweetener in a proportion such that the total sweetness due to the high intensity sweetener (s) accounts for not less than 35% by weight of the entire sweetness (100% by weight) of the final product carbonated drink on the sucrose equivalent basis.
Furthermore, the present disclosure provides the following method for reducing the body feel and sharp feel of carbonated drinks as well as the burning feel of alcoholic drinks:

16. A method for reducing the body feel and irritating feel due to plant-derived component(s) and carbon dioxide as well as burning feel due to alcohol of a carbonated drink containing, as a basic formulation, 10 to 80% by weight of the plant-derived component (s), 2% by volume or more of carbon dioxide, and 1 to 15% by weight of alcohol, the method comprising adding high intensity sweetener(s) in addition to the above components and producing the carbonated drink so that the carbonated drink has the following characteristics (1) to (3):

(1) a soluble solids content being not higher than 8 degrees as indicated by a refractive saccharometer;
(2) a entire sweetness being equivalent to the sweetness of sucrose content of 8 to 14% by weight; and
(3) a total sweetness due to the high intensity sweetener (s) accounting for not less than 25% by weight of the entire sweetness (100% by weight) on the sucrose equivalent basis.
The above reduction method includes the following modes of embodiment:

(16-1) A reduction method according to the above item 16, wherein the carbonated drink contains juice(s) squeezed from fruit(s) or vegetable(s) as the plant-derived component(s).

(16-2) A reduction method according to the above item 16, wherein the carbonated drink contains fruit juice (s) as the plant-derived component(s).

(16-3) A reduction method according to the above item 16, wherein the carbonated drink contains the plant-derived component(s) in a proportion of 30 to 70% by weight.

(16-4) A reduction method according to the above item 16, wherein the carbonated drink contains carbon dioxide in a proportion of 2 to 4% by volume.

(16-5) A reduction method according to the above item 16, the method comprising producing the carbonated drink in such a manner that the soluble solids content of the carbonated drink is 2 to 8 degrees as indicated by a refractive saccharometer

(16-6) A reduction method according to the above item 16, wherein at least one sweetener selected from the group consisting of sucralose, aspartame, acesulfame potassium, neotame, alitame, saccharin sodium, stevia-derived sweeteners and thaumatin is used as the high intensity sweetener(s).

(16-7) A reduction method according to the above item 16, wherein a mixture of sucralose and at least one sweetener selected from the group consisting of aspartame, acesulfame potassium, neotame, alitame, saccharin sodium, stevia-derived sweeteners and thaumatin is used as the high intensity sweetener(s).

(16-8) A reductionmethod according to the above item 16, wherein at least sucralose is used as the high intensity sweetener in a proportion such that the sweetness due to sucralose accounts for not less than 50% by weight of the entire sweetness (100% by weight) due to all high intensity sweetener (s) on the sucrose equivalent basis.

(16-9) A reduction method according to the above item 16, wherein the sweetener(s) is(are) added in a proportion such that the entire sweetness of the final product carbonated drink becomes equivalent to the sweetness of a sucrose content of 8 to 12% by weight.

(16-10) A reduction method according to the above item 16, wherein at least one high intensity sweetener is added as the sweetener in a proportion such that the total sweetness due to the high intensity sweetener (s) accounts for 25 to 85% by weight of the entire sweetness (100% by weight) of the final product carbonated drink on the sucrose equivalent basis.

(16-11) A reduction method according to the above item 16, wherein at least one high intensity sweetener is added as the sweetener in a proportion such that the total sweetness due to the high intensity sweetener (s) accounts for not less than 35% by weight of the entire sweetness (100% by weight) of the final product carbonated drink on the sucrose equivalent basis.

## BEST MODE FOR CARRYING OUT THE INVENTION

The carbonated drink according to the present invention has the following constitution elements,

(1) containing plant-derived component(s) in a proportion of 10 to 80% by weight;
(2) containing carbon dioxide in a proportion of 2% by volume or more;
(3) having a soluble solids content of not higher than 8 degrees as indicated by a refractive saccharometer;
(4) having an entire sweetness equivalent to the sweetness of a sucrose content of 8 to 14% by weight;
(5) containing at least one high intensity sweetener, said at least one high intensity sweetener including sucralose;
(6) having the total sweetness due to the high intensity sweetener (s) accounting for at least 25% by weight of the entire sweetness (100% by weight) on the sucrose equivalent basis.

The term "sucrose equivalent basis" as used herein means that the amount of a sweetening component is converted to the amount of sucrose based on the relative sweetness of the sweetening component with the sweetness of sucrose being taken as 1. The amount of a sweetening component as expressed "on the sucrose equivalent basis" indicates the amount of that component as obtained by conversion to the amount of sucrose. More specifically, such amount can be calculated referring, for example, to sucrose-based sweetness conversion tables known in the art (as details later herein).

The carbonated drink of the present invention, which contains the above components in the above specific proportions, has a good taste due to the plant-derived component(s) (e.g. fruit juice) and a refreshing feel due to appropriate stimulation by carbon dioxide, and thus has a generally balanced taste (taste/flavor, feel). Therefore, the carbonated drink, which is the subject of the present invention, maybe any one containing the above components in the above proportions at the time of drinking and, so long as these conditions are satisfied, the form thereof for distribution in the market or the proportions of the respective components are not particularly restricted. Specifically, the carbonated drink of the present invention includes a form capable of drinking as it is (straight drink), a form to be diluted prior to drinking (e.g. a drink concentrate, a type for combining a syrup and carbonated water prepared as separated solutions prior to drinking such as in a cup vendor), a form to be dissolved (e.g. a powdered drink) or a form for infusion (e.g. processed tea leaves, tea bags). The form drinkable without any treatment such as dilution or dissolution prior to drinking is preferred and, as examples thereof, there may be mentioned carbonated drinks contained in tightly closed containers such as cans, bottles or PET bottles.

In the following section, the respective constituent elements of the carbonated drink of the present invention are described.

(1) the carbonated drink containing plant-derived component(s) in a proportion of 10 to 80% by weight.

The plant-derived component includes a wide variety of components obtained by using, as starting materials, edible portions (fruits, grains, leaves, barks, rhizomes, petals, etc.) contained in plant bodies such as fruits, vegetables and like farm crops, and by subjecting them to an optional treatment process, for example oozes (e.g. saps) obtained from the above-mentioned edible portions of desired plants, or squeezed juices, crushed or broken matter (hereinafter referred to "broken matter") (purees, pastes, finely divided matters) and extracts (liquid extracts) of such edible portions, among others.

As specific examples of the squeezed juices, there may be mentioned juices (fruit juices) squeezed from various fruits such as mandarin, orange, lemon, lime, citron, grapefruit, shaddock, Japanese summer orange, hassaku orange, yuzu, sudachi, kabosu, cumquat and other citrus fruits; apple, grape, peach, melon, watermelon, pear, strawberry, pineapple, banana, baccae, apricot, Japanese apricot, cherry, guava, prune, raspberry, blueberry, cranberry, cowberry, silverberry, mulberry, gooseberry, currant, blackberry, litchi, mango, papaya, passion fruit, star fruit, durian, mangosteen and other tropical fruits; and aronia (chokeberry); as well as juices (vegetable juices) squeezed from various vegetables such as tomato, carrot, cabbage, onion, cinnamon, Jew's marrow, kale, spinach, broccoli, pumpkin, celery, parsley, Welsh onion, edible burdock, Japanese mushroom, Japanese pine fungus, Japanese hornwort, Chinese cabbage and beans or peas.

One of these squeezed fruit or vegetable juices of these may be used individually, or, a mixture of two or more fruit squeezed juices, a mixture of two or more vegetable squeezed juices, or a mixture of one or two fruit squeezed juices and one or more vegetable squeezed juices may be used. Preferred are fruit juices and fruit juice-containing vegetable juices. These fruit and/or vegetable juices may contain broken fruit or vegetable pieces (e.g. fruit pulp or flesh), tissues such as juice sacs, and/or insoluble matters such as cellulose.

As broken matter, there may be mentioned finely divided pulps or vegetables, which are obtained by crushing the above-mentioned various fruits or vegetables; and purees or pastes prepared by straining and concentration of the finely divided matter.

Further, as extracts, there may be mentioned extracts from plant grains such as cola, guarana and coffee; extracts from rhizomes of such plants as ginger, sassafras and sassaperilla; or extracts from herbs or spices such as chamomile, elderflower, lemon balm, lavender, clove, garlic, capsicum, pepper, mustard, Japanese pepper, Japanese horseradish, laurel, clove, thyme, sage, nutmeg, mace, cardamon, caraway, anise, basil, fennel, cumin, turmeric, paprika, saffron, basil, bay leaf, majoram, oregano, rosemary, sage, tarragon, thyme, coriander, cumin, and dill.

In the practice of the present invention, use as the plant-derived component (s) may also be made of products prepared from the above oozes, squeezed juices, broken matter (purees, pastes, pulps) , extracts (liquid extracts) and the like by further treatment for reducing the contents of or removing the sucrose, acids or insoluble constituents. Use may further be made of 4- to 5-fold concentrates derived from pressed juices such as concentrated fruit juices; dilutions of concentrated fruit juices diluted by the same concentration factor, such as reconstituted fruit juices; or concentrates with a volatile aroma-rich fraction cut back out of the aqueous fraction evaporated upon concentration.

The carbonated drink of the present invention contains the plant-derived component (s) in a proportion of 10 to 80% by weight. When a concentrated squeezed juice resulting from removal of water, such as a concentrated fruit juice, is used as the plant-derived component, the amount after returning to the concentration just after squeezing (before concentration) is regarded as the content of the plant-derived component(s). The content of the plant-derived component (s) is preferably within the range of 30 to 70% by weight, most preferably 40 to 60% by weight.

The plant-derived component(s) to be incorporated into the carbonated drink is preferably a squeezed juice or an extract, and most preferably a fruit juice (squeezed fruit juice). In carbonated drinks with a fruit juice content of 30 to 70% by weight, in particular, the effects of the present invention are most fully realized.

When the plant-derived component(s) proportion is much lower than 10% by weight, the taste given by the plant-derived component such as a fruit juice will become poor, hence the intended object of providing a carbonated drink having a rich taste (taste/flavor) of the plant-derived component(s) cannot be attained. When plant-derived component(s) is incorporated in a proportion significantly exceeding 80% by weight, the impression of the taste after drinking becomes too heavy and, therefore, the intended object of providing a carbonated drink having a refreshing feel cannot be accomplished.

(2) The carbonated drink containing carbon dioxide in a proportion of 2% by volume or more.

The gas volume is preferably 2 to 4% by volume, and more preferably 2.5 to 3.5% by volume. This corresponds to a carbon dioxide pressure within the drink of not lower than about 1.4 $kg/cm^2$, preferably 1.4 to 3.7 $kg/cm^2$, and most preferably 2 to 3 $kg/cm^2$, at 20°C.

When the gas volume is less than 2% by volume, the favorable sharp feel intrinsic to carbon dioxide cannot be obtained at plant-derived component proportion of 10 to 80% by weight, hence the intended object of providing a carbonated drink having a rich taste (taste/flavor) due to the plant-derived component and having a refreshing feel cannot be achieved.

(3) The carbonated drink having a soluble solids content of not higher than 8 degrees as indicated by a refractive saccharometer:

Generally, the soluble solids content indicates the total weight (g) of a water-soluble constituent(s), specifically nonvolatile materials such as saccharide(s), organic acid(s) and/or the like, dissolved in 100 g of a liquid food, such as a drink, and it is generally used as an index (Brix) indicating the sugar content of a liquid food, in particular a fruit drink. The soluble solid content (Brix) is generally be indicated by a refractive saccharometer. Thus, the carbonated drink, which is the subject of the present invention, contains soluble solids in an amount of not more than 8 degrees as indicated by a refractive saccharometer.

When the soluble solids content (indicated by a refractive saccharometer) markedly exceeds 8 degrees, the taste of the finally prepared carbonated drink acquires an excessively prominent body feel due to the soluble solids, hence the desired taste cannot be obtained.

The carbonated drink preferably has a soluble solids content within the range of 2 to 8 degrees, and more preferably 4 to 6 degrees, as indicated by a refractive saccharometer.

(4) The carbonated drink having an entire sweetness equivalent to the sweetness of a sucrose content of 8 to 14% by weight:

Thus, the carbonated drink of the present invention contains sweetening component(s) in a proportion of 8 to 14% by weight on the sucrose equivalent basis. Due to the drink containing a sweetening component(s) in such a proportion, it becomes possible to attain a balance between the taste due to the plant-derived component contained in the above-mentioned proportion and the stimulation by carbon dioxide contained in the above-mentioned proportion to give a drink having a good taste and giving a cool and refreshing feel upon drinking, as intended. The total amount of the sweetening component (total sweetness) preferably corresponds to 8 to 12% by weight, and more preferably 9 to 11% by weight, on the sucrose equivalent basis.

When the entire sweetness is much less than 8% by weight on the sucrose equivalent basis, the bitterness of and/or irritation by carbon dioxide tends to be felt strongly. When the entire sweetness significantly exceeds 14% by weight on the sucrose equivalent basis, the sweetness tends to feel heavy, impairing the refreshing feel.

The sweetening component to be used in the practice of the present invention includes a wide variety of sweetening ingredients known in the art or to be known in the future. As specific examples, there may be mentioned acesulfame potassium, arabinose, alitame, isotrehalose, isomaltitol, isomaltooligosaccharides (e.g. isomaltose, isomaltotriose, panose), erythritol, oligo-N-acetylglucosamine, galactose, galactosylsucrose, galactosyllactose, licorice extract (glycyrrhizin), xylitol, xylose, xylooligosaccharides (e.g. xylotriose, xylobiose), glycerol, curculin, glucose, gentiooligosaccharides (e.g. gentiobiose, gentiotriose, gentiotetraose), saccharin, saccharin sodium, cyclamates, stachyose, dulcin, sorbose, thaumatin, stevia extract, theandeoligosaccharides, trehalose, Nigeria berry extract, nigerooligosaccharides (e.g.nigerose), neotame, neotrehalose, neohesperidin dihydrochalcone, palatinit, palatinose, fructooligosaccharides (e.g. kestose, nystose), fructose, polydextrose, maltitol, maltose, maltooligosaccharides (e.g. malto-triose, tetraose, pentaose, hexaose, heptaose), mannitol, miracle fruit extract, momordicae fructus extract, lactitol, lactose, raffinose, rhamnose, ribose, isomerized sugar, reduced isomaltooligosaccharides, reduced xylooligosaccharides, reduced gentiooligosaccharides, reduced saccharified starch syrup, enzyme-treated licorice, enzyme-treated stevia, enzymolyzed licorice, sugar-coupled starch syrup (coupling sugar), soybean oligosaccharides, invert sugar, starch syrup, honey, and like sweetening ingredients.

Suitable are sucrose, glucose, fructose, fructose-glucose liquid sugar, like liquid sugars, starch syrup, reduced starch syrup, honey, oligosaccharides such as isomaltooligosaccharides and lactose-fructose oligosaccharides, and like saccharides; sorbitol, maltitol, mannitol, erythritol, xylitol and like sugar alcohols; and α-glucosyltransferase-treated stevia, aspartame, acesulfame potassium, alitame, saccharin, saccharin sodium, cyclamates, stevia extract, steviapowder, sucralose, thaumatin, neotame and like high intensity sweeteners. The component constituting the sweetness of the carbonated drink of the present invention includes not only the above-mentioned sweetening ingredients but also those sweet ingredients (fruit juice-derived fructose etc.) contained in plant tissue components.

The entire sweetness of the carbonated drink can be calculated by converting the amounts (weight concentrations) of respective sweetening ingredients to the corresponding amounts of sucrose (on the sucrose equivalent basis) according to their relative sweetness ratios with the sweetness of sucrose being taken as 1, and then totaling the sucrose equivalent amounts (weight concentrations) of all the sweetening ingredients contained in the carbonated drink.

The relative sweetness ratios of various sweetening ingredients, with the sweetness of sucrose being taken as 1, can be taken from a sucrose-based relative sweetness conversion table or the like, which is known in the art. For example, according to "Inryo Yogo Jiten (An Encyclopedia of Beverage Terms)" (published June 25, 1999byBeverage Japan), Data Section, page 11, the relative sweetness ratios of various sweetening ingredients, with the sweetness of sugar (saccharose, sucrose) being taken as 1, are as shown in the table given below. Referring to such data, the above-mentioned sucrose equivalent weights of respective sweetening ingredients can be calculated.

| | |
|---|---|
| Sugar (saccharose, sucrose) | 1 |
| Isomerized sugar | 0.8-0.9 |
| Glucose | 0.6-0.7 |
| Fruit sugar (fructose) | 1.3-1.7 |
| Milk sugar (lactose) | 0.2-0.3 |
| Malt sugar (maltose) | 0.4 |
| Xylose | 0.4-0.8 |
| Isomerized lactose (lactulose) | 0.6-0.7 |
| Fructooligosaccharides | 0.6 |
| Maltooligosaccharides | 0.3 |
| Isomaltooligosaccharides | 0.4-0.5 |
| Galactooligosaccharides | 0.7 |
| Coupling sugar | 0.5-0.6 |
| Palatinose (syrup) | 0.4 (0.7) |
| Maltitol (reduced malt sugar syrup) | 0.8 |
| Sorbitol (sorbit) | 0.6-0.7 |
| Erythritol | 0.8 |
| Xylitol (xylite) | 0.6 |
| Lactitol (reduced lactose) | 0.4 |
| Reduced palatinose (isomalt) | 0.5 |
| Reduced saccharified starch | 0.1-0.6 |
| Stevia | 150-300 |
| Glycyrrhizin | 250 |
| Thaumatin | 3000-5000 |
| Monellin | 3000 |
| Aspartame | 200 |
| Alitame | 2000-2900 |
| Saccharin | 300-500 |
| Cyclamate (cyclamate sodium) | 30-40 |
| Acesulfame potassium | 200 |
| Sucralose | 600 |
| Dulcin | 200-250 |

The carbonated drink of the present invention may contain only one single sweetening ingredient or two or more sweetening ingredients. It is necessary, however, that at least one high intensity sweetener be contained as sweetening ingredient.

(5) The carbonated drink containing at least one high intensity sweetener:

As examples of the high intensity sweeteners which may be present in addition to sucralose incorporated into the carbonated drink of the present invention, there may be mentioned those listed hereinabove. Preferred are hereinafter the relative sweetness ratio to sucrose is given in the parentheses) aspartame (about 200 times), acesulfame potassium (about 200 times), neotame (about 8,000 times), alitame (about 2,000 times), saccharin sodium (about 300 times), stevia-derived sweeteners (about 100 to 300 times; depending on the raw material and production method), and thaumatin (about 3,000 times). These high intensity sweeteners may be used singly, or two or more of them may be used in combination. Preferably used among those mentioned above is at least one sweetener selected from the group consisting of, aspartame, acesulfame potassium and neotame. Sucralose is used alone or in combination with at least one of high intensity sweetener (aspartame, acesulfame potassium, neotame, alitame, saccharin sodium, stevia-derived sweeteners, or thaumatin). In such combination, the sweetness due to sucralose accounts for at least 50% by weight (on the sucrose equivalent basis) of the total sweetness (100% by weight on the sucrose equivalent basis) due to all the high intensity sweeteners used.

(6) The carbonated drink having the total sweetness due to the high intensity sweetener(s) accounting for at least 25% by weight of the entire sweetness (100% by weight) on the sucrose equivalent basis.

The sweetness due to the high intensity sweetener (s) is preferably not less than 35% by weight, and more preferably not less than 45% by weight, of the entire sweetness (100% by weight on the sucrose equivalent basis). There is no particular upper limit. For example, all the sweetening ingredients, except for the fruit juice-derived sweetness, may be substituted by the high intensity sweetener(s) and, in this case, 85% by weight (on the sucrose equivalent basis), for instance, may be mentioned as an upper limit to the extent of substitution by the high intensity sweetener(s).

The high intensity sweeteners referred to above include those high intensity sweeteners mentioned-above (4) and (5). Preferred is a combination of sucralose and one or more selected from among aspartame, ascesulfame potassium, neotame, alitame, saccharin sodium, stevia-derived sweeteners and thaumatin. When two or more of these high intensity sweeteners are used in combination, the total sweetness is the sum of the sweetness values of the respective sweeteners.

When the total sweetness (on the sucrose equivalent basis) due to the high intensity sweetener(s) is much less than 25% by weight, the sweetness may feel heavy, or the fresh feel due to the plant-derived component and/or the refreshing feel due to carbon dioxide may be lacking and the taste may feelheavy; hence, the intended object will not be attained.

In the practice of the present invention, shochu highballs (chuhai), cocktail sodas and like alcoholic carbonated drinks may be produced by further addition of alcohol. The level of addition of alcohol is not particularly restricted if it is within the ordinary range for drinking. Preferably, for instance, it is 1 to 15%. It is possible to produce alcoholic drinks containing a plant-derived component such as a fruit juice, and carbon dioxide, in relatively large amounts while reducing not only the excessive body feel (heavy taste) and irritating feel due to the plant-derived component and carbon dioxide, but also the burning feel due to the alcohol.

Unless the effects of the present invention are adversely effected, the carbonated drink of the present invention may further contain one or more of other ingredients, such as milk components, colorants, aromatizers, souring agents and flavor correctives so that the carbonated drink may be provided with desired flavor, color, aroma, and taste. If desired, Vitamins (B group vitamins, vitamin C, etc.), calcium species (calcium lactate, calcium gluconate, etc.), minerals (iron, magnesium, phosphorus, potassium, etc.), dietary fibers and the like may also be added. Furthermore, for quality maintenance, a preservative, antioxidant, antifading agent and/or like agent may also be incorporated.

The carbonated drink of the present invention can be produced by a method substantially comprising the following steps of:

(1) adding plant-derived component (s) so that the final product carbonated drink contains the plant-derived component(s) in a proportion of 10 to 80% by weight;
(2) adding sweetener(s) so that the final product carbonated drink has an entire sweetness equivalent to the sweetness of a sucrose content of 8 to 14% by weight;
(3) adding at least one high intensity sweetener as the sweetener (s) so that the final product carbonated drink has the total sweetness due to the high intensity sweetener(s) accounting for at least 25% by weight of the entire sweetness (100% by weight) on the sucrose equivalent basis, said at least one high intensity sweetener including sucralose;
(4) adjusting the soluble solids content so that the final product carbonated drink has the soluble solids content of not higher than 8 degrees as indicated by a refractive saccharometer; and
(5) charging with carbon dioxide so that the final product carbonated drink contains carbon dioxide in an amount of 2% by volume or more.

Specifically, the following production process may be given as an example. First, to water suitable for drinking, there are added, in an appropriate order, the plant-derived component (s) and sweetening component so that their proportions amount to the levels respectively mentioned hereinabove, together with an appropriate amount each of alcohol, souring agent, minerals, vitamins, aroma, colorant, preservative, antioxidant and/or antifading agent, as necessary, to prepare a drink stock (protodrink). This is then subjected to degassing and sterilization treatment according to need, cooled and, after charging carbon dioxide to a predetermined gas volume level in the conventional manner, the resulting carbonated drink is filled into containers.

The thus-obtained, plant-derived component(s)-containing carbonated drink tastes comfortable with a cool and refreshing feel, namely the rich taste of the plant-derived component(s) and an adequate level of the stimulation by carbon dioxide, without the taste becoming excessively heavy or the irritation becoming excessively strong, in spite of its containing the plant-derived component(s) and carbon dioxide in relatively large amounts.

The present disclosure further provides a method for reducing the body feel and irritating feel due to the plant-derived component (s) and carbon dioxide of a carbonated drink containing, as a basic formulation, 10 to 80% by weight of the plant-derived component(s) and 2% by volume or more of carbon dioxide.

The carbonated drink, which is the subject of the present invention, is not particularly restricted but may be any one provided that it contains the plant-derived component and carbon dioxide in the above-specified respective ranges. Preferably, it is a carbonated drink containing the plant-derived component(s) in a proportion of 30 to 70% by weight, and more preferably 40 to 60% by weight, or a carbonated drink containing carbon dioxide in a proportion of 2 to 4% by volume, and more preferably 2.5 to 3.5% by volume. The plant-derived component(s) to be used is as mentioned hereinabove and preferably is fruit juice(s) or squeezed vegetable juice(s) containing fruit juice(s).

The present invention can be carried out by adding high intensity sweetener(s) as a component of the above carbonated drink and adjusting the carbonate drink so that the carbonate drink has the following characteristics (1) to (3):

(1) the soluble solids content being not higher than 8 degrees as indicated by a refractive saccharometer;
(2) an entire sweetness being equivalent to the sweetness of a sucrose content of 8 to 14% by weight; and
(3) a total sweetness due to the high intensity sweetener(s) accounting for not less than 25% by weight of the entire sweetness (100% by weight) on the sucrose equivalent basis.

As for the high intensity sweetener (s) to be used herein and the level of addition thereof, the soluble solids content, the sweetener(s) to be used and the level of addition thereof, and other elements, the description given hereinabove referring to the carbonated drink of the present invention can be referred to.

According to the present invention, a carbonated drink containing 10 to 80% by weight of the plant-derived component (s) and 2% by volume or more of carbon dioxide can be provided with a comfortable taste with a cool and refreshing feel, due to the rich taste of the plant-derived component(s), and an adequate level of stimulation by carbon dioxide, by adjusting the balance of taste and thus suppressing the body feel or irritating feel becoming excessively prominent, without the taste becoming too heavy or the stimulation becoming too strong.

Furthermore, the present disclosure provides a method for reducing the body feel and irritating feel due to the plant-derived component (s) and carbon dioxide as well as burning feel due to alcohol of a carbonated drink containing, as a basic formulation, 10 to 80% by weight of the plant-derived component(s), 2% by volume or more of carbon dioxide, and 1 to 15% by weight of alcohol.

The carbonated drink, which is the subject of the present invention, is not particularly restricted but may be any one provided that it contains the plant-derived component (s), carbon dioxide and alcohol in the above-specified respective ranges. Preferably, it is a carbonated drink containing the plant-derived component(s) in a propotion of 30 to 70% by weight, and more preferably 40 to 60% by weight, or a carbonated drink containing carbon dioxide in a proportion of 2 to 4% by volume, and more preferably 2.5 to 3.5% by volume, or a carbonated drink containing alcohol in a proportion of 1 to 15% by weight. The plant-derived component(s) to be used is as mentioned hereinabove and preferably is fruit juice(s) or squeezed vegetable juice(s) containing fruit juice(s).

The present invention can be carried out by adding high intensity sweetener(s) including sucralose as a component of the above carbonated drink and producing the carbonated drink so that the carbonated drink has the following characteristics (1) to (3):

(1) the soluble solids content being not higher than 8 degrees as indicated by a refractive saccharometer;
(2) the entire sweetness being equivalent to the sweetness of a sucrose content of 8 to 14% by weight; and
(3) the total sweetness due to the high intensity sweetener (s) accounting for not less than 25% by weight of the entire sweetness (100% by weight) on the sucrose equivalent basis.

As for the high intensity sweetener (s) to be used herein and the level of addition thereof, the soluble solid content, the sweetener(s) to be used and the level of addition thereof, and other elements, the description given hereinabove referring to the carbonated drink of the present invention can be referred to.

According to the present invention, a carbonated drink containing 10 to 80% by weight of the plant-derived component (s), 2% by volume or more of carbon dioxide and 1 to 15% by weight of alcohol can be provided with a comfortable taste with a cool and refreshing feel due to the rich taste of the plant-derived component and an adequate level of stimulation by carbon dioxide, by adjusting the balance of taste and thus suppressing the body feel or irritating feel becoming excessively prominent and suppressing the burning feel resulting from the incorporation of alcohol, without the taste becoming too heavy or the stimulation becoming too strong.

## EXAMPLES

The following examples illustrate the present invention more specifically. They are, however, by no means limitative of the scope of the present invention. In the following, the mark "*" means that the material marked therewith is a product of San-Ei Gen F.F.I. Inc.

Example 1 and Comparative Examples 1 to 3

Several carbonated drinks (Example 1 and Comparative Examples 1 to 3) were prepared according to the respective formulations specified in Table 1 by the following production process.

<Production process>

Each liquid preparation was prepared in a formulation tank according to the formulation shown in Table 1, and carbon dioxide was charged into the liquid preparation obtained to a level of 3% by volume in the conventional manner using a carbonator (Carbo Fill FT103G; product of Armfield). The resulting formulation was filled into 200 ml glass bottles and sterilized at 70°C for 20 minutes. Thus were prepared grape-based carbonated drinks.

The plant-derived component content (% by weight), gas volume (% by volume), soluble solids content (indicated by a refractive saccharometer), entire sweetness (on the sucrose equivalent basis) and high intensity sweetener proportion (on the sucrose equivalent basis) to entire sweetness are also shown in Table 1.

Referring to the carbonated drink of Example 1, for instance, the entire sweetness and the proportion of the high intensity sweetener to the entire sweetness are as follows. The carbonated drink of Example 1 contains 0.0065% by weight of sucralose (sucrose equivalent sweetness: 0.0065% by weight x 600 = 3.9% by weight (Note 1)) and 10% by weight of 5-fold concentrated grape juice (containing 50% of sucrose) (sucrose equivalent sweetness: 10% by weight x 0.5 x 1.3 = 6.5% by weight (Note 2)) and, therefore, the entire sweetness is 10.4% by weight (3.9% by weight + 6.5% by weight = 10.4% by weight) on the sucrose equivalent basis and the proportion of sucralose relative to the entire sweetness is 37.5% by weight (3.9% by weight/10.4% by weight = 0.375).

Note 1): On the supposition that sucralose is 600 times as sweet as sucrose.

Note 2): On the supposition that fructose is 1.3 times as sweet as sucrose.

Each grape-based carbonated drinks prepared in the above manner was evaluated by 5 panelists as to taste, refreshing feel and fruity feel. For each evaluation item, scores were given by the 5 panelists according to the following one-to-five scale and the mean of the five scores was reported.

<Evaluation criteria>

5 Very good
4 Fair
3 Average
2 Poor
1 Very poor

The results are also shown in Table 1. Panelists' overall opinions on taste are also shown in Table 1.

Table 1

| | | Example 1 | Comparative Example 1 | Comparative Example 2 | Comparative Example 3 |
|---|---|---|---|---|---|
| Proportions of materials | 5-fold concentrated grape juice | 10 | 10 | 1 | 10 |
| | Sucralose* | 0.0065 | - | 0.0098 | 0.0065 |
| | Fructose-glucose liquid sugar (Note 3) | - | 4.9 | 4.7 | - |
| | Citric acid (anhydrous)* | 0.05 | 0.05 | 0.09 | 0.05 |
| | Grape flavor* | 0.1 | 0.1 | 0.1 | 0.1 |
| | Water | Balance | Balance | Balance | Balance |
| | Total | 100 | 100 | 100 | 100 |
| Plant-derived component content (w/w %) | | 50% | 50% | 5% | 50% |
| Gas volume (v/v %) | | 3.0 | 3.0 | 3.0 | 1.5 |
| Soluble solids content (Note 4) | | 5.1 degrees | 9.0 degrees | 4.1 degrees | 5.1 degrees |
| entire sweetness (Note 5) | | 10.4 | 10.4 | 10.4 | 10.4 |
| Proportion of high intensity sweetener (Note 6) | | 38% | 0% | 56% | 38% |
| Evaluation | Taste | 4.8 | 2.0 | 4.0 | 4.8 |
| | Refreshing feel | 4.8 | 2.4 | 4.2 | 1.4 |
| | Fruity taste | 5.0 | 3.2 | 1.2 | 4.6 |
| | Overall opinion on taste 1 | Freshness matched with stimulating feel of carbonic acid | Thick, hence heavy taste, and weak feel of carbonic acid | Thin, with strong bitterness of and irritation by carbonic acid | Comfortable and juice taste but weak refreshment by carbonic acid, hence unsatisfactory |
| | Overall opinion on taste 2 | Proper feel of carbonic acid and comfortable taste (pleasant to drink) | A large amount is hard to drink at once (no more wanted) | Lack of good fruity taste, and prominent irritation by carbonic acid | Good fruity taste but lack of refreshing feel |

Note 3): The fructose-glucose liquid sugar contains 55% of fructose and a solids content of 75%.

Note 4): The soluble solids content is indicated by the value indicated by a refractive saccharometer.

Note 5): The entire sweetness, or entire sweetener content, is given in terms of the total amount of the sweetening ingredients on the sucrose equivalent basis.

Note 6): The proportion of the high intensity sweetener is given in terms of the proportion, on the sucrose equivalent basis, thereof to all the sweetening ingredients.

As is evident from Table 1, the formulation of Example 1 successfully gave a carbonated drink exhibiting the taste and flavor of grape strongly and having a comfortable taste and freshness matched with the stimulation by carbonic acid. In the contrast, according to the formulation of Comparative Example 1, the soluble solids content (saccharide content) was high, hence the taste became heavy and the refreshing feel was lacking; according to the formulation of Comparative Example 2, the plant-derived component (fruit juice) content was low, hence the fruity feel was weak and the drinkwas thin, with the bitterness and excessive irritation of carbonic acid being outstanding; and, according to the formulation of Comparative Example 3, the volume of carbon dioxide was small, hence the drink was lacking in refreshing stimulation.

These results revealed that, for preparing drinks having both a fruity feel and a carbonic acid feel, it is necessary to adjust the soluble solid content (Brix), plant-derived component content and gas volume in a well-balanced manner while using a high intensity sweetener(s).

Example 2

A fruit juice-containing carbonated drink was prepared by charging carbon dioxide into a fruit juice-containing drink having the formulation shown below to a gas volume of 2.5% by volume.

| <Formulation> | (wt %) |
|---|---|
| 5-fold concentrated transparent apple juice (containing 50% by weight of fructose) | 4 |
| Transparent lemon juice | 1 |
| Squeezed carrot juice (deprived of pulp) | 10 |
| Sucralose* | 0.0075 |
| Acesulfame potassium | 0.0035 |
| Fructose-glucose liquid sugar (fructose 55%, solid content 75%, sweetness 0.8 on the sucrose equivalent basis) | 2.5 |
| Citric acid (anhydrous)* | 0.02 |
| Apple flavor* | 0.1 |
| Water | Balance |
| Total | 100% by weight |

The carbonated drink obtained had a plant-derived component (fruit juice, Squeezed vegetable juice) content of 31% by weight and a soluble solids content (indicated by a refractive saccharometer) of 4.5 degrees.

The carbonated drink of Example 2 contained, as sweetening ingredients, 0.0075% by weight of sucralose (sweetness on the sucrose equivalent basis: 0.0075% by weight x 600 = 4.5% by weight (Note 7)), 0.0035% by weight of acesulfame potassium (sweetness on the sucrose equivalent basis: 0.0035% by weight x 200 =0.7% by weight (Note 8)), 4% by weight of 5-fold concentrated apple juice (fructose content 50%, sweetness on the sucrose equivalent basis: 4% by weight x 0.50 (fructose 50% by weight) x 1.3 = 1.6% by weight) and 2.5% by weight of fructose-glucose liquid sugar (sweetness on the sucrose equivalent basis: 2.5% by weight x 0.8 (sweetness on the sucrose equivalent basis) =2.0% by weight), hence the entire sweetness, or entire sweetener content, was 9.8% by weight on the sucrose equivalent basis.

Note 7): Sucralose is 600 times as sweet as sucrose.

Note 8): Acesulfame potassium is 200 times as sweet as sucrose.

The total sweetness due to the high intensity sweeteners (sucralose and acesulfame potassium) amounted to 53.1% by weight of the entire sweetness on the sucrose equivalent basis, and the sweetness due to sucralose amounted to 86.5% by weight of the total sweetness (100% by weight) due to the high intensity sweeteners on the sucrose equivalent basis.

This drink was evaluated for taste by panelists in the same manner as in Example 1, and the scores 4.8 for taste, 4.6 for refreshing feel, and 4.4 for fruity feel were obtained with opinions "fresh fruity taste matched with the stimulating feel of carbonic acid" and "no carrot smell", among others.

Example 3 Tea soda drink

A tea soda drink was prepared by charging carbon dioxide into a tea extract-containing preparation having the formulation shown below to a gas volume of 2.2% by volume.

| <Formulation> | (wt %) |
|---|---|
| Tea extract (Brix 1.2) | 25 |
| Sucralose* | 0.008 |
| Erythritol | 2 |
| 5-fold concentrated apple juice | 4 |
| (transparent, fructose content 50%) Citric acid (anhydrous)* | 0.03 |
| Vitamin C | 0.02 |
| Apple flavor* | 0.1 |
| Tea flavor* | 0.05 |
| Water | Balance |
| Total | 100% by weight |

The carbonated drink obtained had a plant-derived component (fruit juice, tea extract) content of 45% by weight and a soluble solids content (indicated by a refractive saccharometer) of 4.6 degrees.

The carbonated drink of Example 3 contained, as sweetening ingredients, 0.008% by weight of sucralose (sweetness on the sucrose equivalent basis: 0.008% by weight x 600 = 4.8% by weight (Note 9)), 2% by weight of erythritol (sweetness on the sucrose equivalent basis: 2% by weight x 0.8 = 1.6% by weight (Note 10)) and 4% by weight of 5-fold concentrated apple juice (fructose content 50%, sweetness on the sucrose equivalent basis: 4% by weight x 0.50 (fructose 50% by weight) x 1.3 = 2.6% by weight), hence the entire sweetness, or entire sweetener content, was 9.0% by weight on the sucrose equivalent basis. The sweetness due to sucralose amounted to 53.3% by weight of the whole sweetness on the sucrose equivalent basis.

Note 9): Sucralose is 600 times as sweet as sucrose.

Note 10): Erythritol is 0.8 times as sweet as compared with sucrose.

This drink was evaluated for taste by panelists in the same manner as in Example 1, and the following scores were obtained: 4.7 for taste, 4.2 for refreshing feel, and 4.3 for fruity feel. This drink tasted comfortable, was good in tea taste and flavor and in apple juiced-due fruity taste and also had a refreshing effect due to carbon dioxide. Thus, it was a good drink with tastiness matched with a refreshing feel.

Example 4 Apple juice-containing carbonated alcohol drink

According to the formulation shown below, sucralose, 5-fold concentrated transparent apple juice, citric acid and a flavor were added to and dissolved in shochu (a clear distilled liquor), and the total amount was made up to 40 parts by weight by adding water. This liquid was distributed in 80 ml portions into bottles, and the total amount in each bottle was made 200 ml by adding carbonated water (gas pressure: 196 kPa (2. 0 kg/cm$^2$) i.e. 2.6% by volume), followed by 20 minutes of sterilization at 70°C. Thus was prepared an apple juice-containing carbonated alcoholic drink (alcohol content: 6.0%).

| <Formulation Example> | | (Part by weight) |
|---|---|---|
| 1 | Shochu (35 % v/v alcohol) | 17.5 |
| 2 | Sucralose | 0.0067 |
| 3 | 5-fold concentrated transparent juice (fructose content 50%) | apple 6.6 |
| 4 | Citric acid (anhydrous)* | 0.1 |
| 5 | Apple flavor No. 64625* | 0.2 |
| Add | water to a total of 40 | parts by weight |

The alcoholic drink obtained had a plant-derived component (fruit juice) content of 33% by weight and a soluble solids content of 6. 0 degrees. It contained, as sweetening ingredients, 0.0067% by weight of sucralose (sweetness on the sucrose equivalent basis: 0.0067% by weight x 600 = 4% by weight) and 6.6% by weight of 5-fold concentrated apple juice (fructose content 50%, sweetness on the sucrose equivalent basis: 6.6% by weight x 0.50 (fructose 50% by weight) x 1.3 = 4.3% by weight), hence the entire sweetness, or entire sweetener content, was 8.3% by weight on the sucrose equivalent basis. The sweetness due to the high intensity sweetener (sucralose) amounted to 48.2% by weight of the entire sweetness on the sucrose equivalent basis.

These drinks (Example 4 and Comparative Example 4) were evaluated for taste by panelists in the same manner as in Example 1, and the following scores were given to the drink of Example 4: 4.6 for taste, 4.8 for refreshing feel, and 4.7 for fruity feel, with such opinions as "the fruit-juicy feel and carbonic acid feel very well matched with the alcoholic stimulation" and "very smooth taste and softened alcoholic feel, hence easily drinkable".

## INDUSTRIAL APPLICABILITY

According to the present invention, carbonated drinks containing a plant tissue component, such as a fruit juice, and having both the rich taste of a fruit and the stimulating refreshing property of carbonic acid, and thus having a good taste and flavor can be provided. In particular, the present invention can provide drinks containing 10 to 80% by weight of a plant-derived component such as a fruit juice and/or squeezed vegetable juice and more than 2% by volume of carbon dioxide, and having the rich taste of the plant-derived component and the stimulating and refreshing feature of carbonic acid, without the taste becoming too heavy or the stimulation becoming too strong.

## Claims

1. A carbonated drink having the following formulation:

   (1) containing plant-derived component(s) in a proportion of 10 to 80% by weight;
   (2) containing carbon dioxide in a proportion of 2% by volume or more;
   (3) having a soluble solids content of not higher than 8 degrees as indicated by a refractive saccharometer;
   (4) having an entire sweetness equivalent to the sweetness of a sucrose content of 8 to 14% by weight;
   (5) containing at least one high intensity sweetener, said at least one high intensity sweetener including sucralose ;
   (6) having the total sweetness due to the high intensity sweetener (s) accounting for at least 25% by weight of the entire sweetness (100% by weight) on the sucrose equivalent basis.

2. A carbonated drink according to Claim 1, wherein the plant-derived component is juice (s) squeezed from fruit(s) or vegetable(s).

3. A carbonated drink according to Claim 1 or 2, wherein the plant-derived component(s) is fruit juice(s).

4. A carbonated drink according to any of Claims 1 to 3, wherein the plant-derived component(s) is contained in a proportion of 30 to 70% by weight.

5. A carbonated drink according to any of Claims 1 to 4, wherein carbon dioxide is contained in a proportion of 2 to 4% by volume.

6. A carbonated drink according to any of Claims 1 to 5, wherein the soluble solids content is 2 to 8 degrees.

7. A carbonated drink according to any of Claims 1 to 6, wherein the sweetness due to sucralose accounts for at least 50% by weight of the entire sweetness (100% by weight) due to all high intensity sweetener (s) contained therein on the sucrose equivalent basis.

8. A carbonated drink according to any of Claims 1 to 7, wherein the high intensity sweetener is a mixture of sucralose and at least one sweetener selected from the group consisting of aspartame, acesulfame potassium, neotame, alitame, saccharin sodium, stevia-derived sweeteners and thaumatin.

9. A carbonated drink according to any of Claims 1 to 8, wherein the entire sweetness thereof is equivalent to the sweetness of a sucrose content of 8 to 12% by weight.

10. A carbonated drink according to any of Claims 1 to 9, wherein the sweetness due to the high intensity sweetener (s) accounts for 25 to 85% by weight of the entire sweetness (100% by weight) on the sucrose equivalent basis.

11. A carbonated drink according to any of Claims 1 to 10, the sweetness due to the high intensity sweetener (s) accounts for at least 35% by weight of the entire sweetness (100% by weight) on the sucrose equivalent basis.

12. A carbonated drink according to any of Claims 1 to 11, which contains 1 to 15% by weight of alcohol.

13. A method for producing carbonated drinks which substantially comprises the following steps of:

(1) adding plant-derived component (s) so that the final product carbonated drink contains the plant-derived component (s) in a proportion of 10 to 80% by weight;
(2) adding sweetener(s) so that the final product carbonated drink has an entire sweetness equivalent to the sweetness of a sucrose content of 8 to 14% by weight;
(3) adding at least one high intensity sweetener as the sweetener (s) so that the final product carbonated drink has the total sweetness due to the high intensity sweetener (s) accounting for at least 25% by weight of the entire sweetness (100% by weight) on the sucrose equivalent basis, said at least one high intensity sweetener including sucralose;
(4) adjusting the soluble solids content so that the final product carbonated drink has the soluble solids content of not higher than 8 degrees as indicated by a refractive saccharometer; and
(5) charging with carbon dioxide so that the final product carbonated drink contains carbon dioxide in a proportion of 2% by volume or more.

## Patentansprüche

1. Kohlensäurehaltiges Getränk mit der folgenden Formulierung:

(1) enthaltend Pflanzen-abgeleitete Komponente(n) in einem Anteil von 10 bis 80 Gew.-%;
(2) enthaltend Kohlendioxid in einem Anteil von 2 Vol.-% oder mehr;
(3) aufweisend einen Gehalt an löslichen Feststoffen von nicht höher als 8 Grad, wie angezeigt durch ein Refraktionssaccharometer;
(4) aufweisend eine Gesamtsüße, äquivalent der Süße eines Sucrosegehalts von 8 bis 14 Gew.-%;
(5) enthaltend mindestens ein hochintensives Süßungsmittel, wobei das mindestens eine hochintensive Süßungsmittel Sucralose einschließt;
(6) aufweisend die Gesamtsüße aufgrund des (der) hochintensiven Süßungsmittel(s), die mindestens 25 Gew.-% der Gesamtsüße (100 Gew.-%) auf der Sucrose-äquivalenten Basis ausmacht.

2. Kohlensäurehaltiges Getränk nach Anspruch 1, wobei die Pflanzen-abgeleitete Komponente Saft ist (Säfte sind), der (die) aus Frucht (Früchten) oder Gemüse(n) ausgedrückt ist (sind).

3. Kohlensäurehaltiges Getränk nach Anspruch 1 oder 2, wobei die Pflanzen-abgeleitete Komponente(n) Fruchtsaft ist (Fruchtsäfte sind).

4. Kohlensäurehaltiges Getränk nach einem der Ansprüche 1 bis 3, wobei die Pflanzen-abgeleitete Komponente(n) in einem Anteil von 30 bis 70 Gew.-% enthalten ist (sind).

**5.** Kohlensäurehaltiges Getränk nach einem der Ansprüche 1 bis 4, wobei Kohlendioxid in einem Anteil von 2 bis 4 Vol.-% enthalten ist.

**6.** Kohlensäurehaltiges Getränk nach einem der Ansprüche 1 bis 5, wobei der Gehalt an löslichen Feststoffen 2 bis 8 Grad beträgt.

**7.** Kohlensäurehaltiges Getränk nach einem der Ansprüche 1 bis 6, wobei die Süße aufgrund von Sucralose mindestens 50 Gew.-% der Gesamtsüße (100 Gew.-%) aufgrund aller darin enthaltener hochintensiver Süßungsmittel auf der Sucrose-äquivalenten Basis ausmacht.

**8.** Kohlensäurehaltiges Getränk nach einem der Ansprüche 1 bis 7, wobei das hochintensive Süßungsmittel ein Gemisch von Sucralose und mindestens einem Süßungsmittel, ausgewählt aus der Gruppe, bestehend aus Aspartam, Acesulfamkalium, Neotam, Alitam, Saccharinnatrium, Steviaabgeleiteten Süßungsmitteln und Thaumatin, ist.

**9.** Kohlensäurehaltiges Getränk nach einem der Ansprüche 1 bis 8, wobei die Gesamtsüße davon der Süße eines Sucrosegehalts von 8 bis 12 Gew.-% äquivalent ist.

**10.** Kohlensäurehaltiges Getränk nach einem der Ansprüche 1 bis 9, wobei die Süße aufgrund des (der) hochintensiven Süßungsmittel(s) 25 bis 85 Gew.-% der Gesamtsüße (100 Gew.-%) auf der Sucrose-äquivalenten Basis ausmacht.

**11.** Kohlensäurehaltiges Getränk nach einem der Ansprüche 1 bis 10, die Süße aufgrund des (der) hochintensiven Süßungsmittel(s) macht mindestens 35 Gew.-% der Gesamtsüße (100 Gew.-%) auf der Sucrose-äquivalenten Basis aus.

**12.** Kohlensäurehaltiges Getränk nach einem der Ansprüche 1 bis 11, das 1 bis 15 Gew.-% Alkohol enthält.

**13.** Verfahren zum Herstellen von kohlensäurehaltigen Getränken, das im wesentlichen die folgenden Schritte umfaßt:

(1) Hinzufügen von Pflanzen-abgeleiteter(n) Komponente(n), so daß das Endprodukt kohlensäurehaltiges Getränk die Pflanzen-abgeleitete(n) Komponente(n) in einem Anteil von 10 bis 80 Gew.-% enthält;
(2) Hinzufügen von Süßungsmittel(n), so daß das Endprodukt kohlensäurehaltiges Getränk eine Gesamtsüße äquivalent der Süße eines Sucrosegehalts von 8 bis 14 Gew.-% aufweist;
(3) Hinzufügen von mindestens einem hochintensiven Süßungsmittel als Süßungsmittel, so daß das Endprodukt kohlensäurehaltiges Getränk die Gesamtsüße aufgrund des (der) hochintensiven Süßungsmittel(s) aufweist, die mindestens 25 Gew.-% der Gesamtsüße (100 Gew.-%) auf der Sucrose-äquivalenten Basis ausmacht, wobei das mindestens eine hochintensive Süßungsmittel Sucralose einschließt;
(4) Einstellen des Gehalts an löslichen Feststoffen, so daß das Endprodukt kohlensäurehaltiges Getränk den Gehalt an löslichen Feststoffen von nicht höher als 8 Grad, wie angezeigt durch ein Refraktionssaccharometer, aufweist; und
(5) Beladen mit Kohlendioxid, so daß das Endprodukt kohlensäurehaltiges Getränk Kohlendioxid in einem Anteil von 2 Vol.-% oder mehr enthält.

**Revendications**

**1.** Boisson gazeuse ayant la formulation suivante:

(1) contenant un ou plusieurs composant(s) d'origine végétale dans une proportion de 10 à 80% en poids;
(2) contenant du dioxyde de carbone dans une proportion de 2% en volume ou plus;
(3) ayant une teneur en matière sèche soluble ne dépassant pas 8 degrés, telle qu'indiquée par un saccharimètre à réfraction;
(4) ayant une sucrosité entière équivalente à la sucrosité d'une teneur en saccharose de 8 à 14% en poids;
(5) contenant au moins un édulcorant de haute intensité, ledit au moins un édulcorant de haute intensité incluant le sucralose;
(6) ayant la sucrosité totale due au(x) édulcorant(s) de haute intensité représentant au moins 25% en poids de la sucrosité entière (100% en poids) sur une base d'équivalent saccharose;

**2.** Boisson gazeuse selon la revendication 1, dans laquelle le composant d'origine végétale consiste en un ou plusieurs jus pressé(s) à partir de fruit(s) ou de légume(s).

**3.** Boisson gazeuse selon la revendication 1 ou 2, dans laquelle le(s) composant(s) d'origine végétale consistent en un ou plusieurs jus de fruits.

**4.** Boisson gazeuse selon l'une quelconque des revendications 1 à 3, dans laquelle le(s) composant(s) d'origine végétale sont contenus dans une proportion de 30 à 70% en poids.

**5.** Boisson gazeuse selon l'une quelconque des revendications 1 à 4, dans laquelle le dioxyde de carbone est contenu dans une proportion de 2 à 4% en volume.

**6.** Boisson gazeuse selon l'une quelconque des revendications 1 à 5, dans laquelle la teneur en matière sèche soluble est de 2 à 8 degrés.

**7.** Boisson gazeuse selon l'une quelconque des revendications 1 à 6, dans laquelle la sucrosité due au sucralose représente au moins 50% en poids de la sucrosité entière (100% en poids) due à tous les édulcorants de haute intensité contenus dedans sur une base d'équivalent saccharose

**8.** Boisson gazeuse selon l'une quelconque des revendications 1 à 7, dans laquelle l'édulcorant de haute intensité est un mélange de sucralose et d'au moins un édulcorant choisi dans le groupe constitué de l'aspartame, de l'acésulfame potassique, du néotame, de l'alitame, de la saccharine sodique, des édulcorants dérivés du stevia, et de la thaumatine.

**9.** Boisson gazeuse selon l'une quelconque des revendications 1 à 8, dans laquelle la sucrosité entière de celle-ci est équivalente à la sucrosité d'une teneur en saccharose de 8 à 12% en poids.

**10.** Boisson gazeuse selon l'une quelconque des revendications 1 à 9, dans laquelle la sucrosité due à l'/aux édulcorant (s) de haute intensité représente 25 à 85% en poids de la sucrosité entière (100% en poids) sur une base d'équivalent saccharose.

**11.** Boisson gazeuse selon l'une quelconque des revendications 1 à 10, dans laquelle la sucrosité due à l'/aux édulcorant (s) de haute intensité représente au moins 35% en poids de la sucrosité entière (100% en poids) sur une base d'équivalent saccharose.

**12.** Boisson gazeuse selon l'une quelconque des revendications 1 à 11, qui contient 1 à 15% en poids d'alcool.

**13.** Procédé de préparation de boissons gazeuses qui comprend en substance les étapes suivantes consistant à:

(1) ajouter un ou plusieurs composant(s) d'origine végétale de sorte que la boisson gazeuse formant le produit final contienne le(s) composant(s) d'origine végétale dans une proportion de 10 à 80% en poids;
(2) ajouter un ou plusieurs édulcorant(s) de sorte que la boisson gazeuse formant le produit final ait une sucrosité entière équivalente à la sucrosité d'une teneur en saccharose de 8 à 14% en poids;
(3) ajouter au moins un édulcorant de haute intensité en tant que le(s) édulcorant(s) de sorte que la boisson gazeuse formant le produit final ait la sucrosité totale due à l'/aux édulcorant(s) de haute intensité représentant au moins 25% en poids de la sucrosité entière (100% en poids) sur une base d'équivalent saccharose, ledit au moins un édulcorant de haute intensité incluant le sucralose;
(4) ajuster la teneur en matière sèche soluble de sorte que la boisson gazeuse formant le produit final ait une teneur en matière sèche soluble ne dépassant pas 8 degrés, telle qu'indiquée par un saccharimètre à réfraction; et
(5) introduire du dioxyde de carbone de sorte que la boisson gazeuse formant le produit final contienne du dioxyde de carbone dans une proportion de 2% en volume ou plus.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S63207367 B
- JP S57110178 B
- JP S60259169 B
- JP 2000004852 A
- JP H10136952 B
- JP H10136953 B

**Non-patent literature cited in the description**

- Inryo Yogo Jiten. Beverage Japan, 25 June 1999, 11